# EUROPÄISCHE PATENTANMELDUNG

(11) **EP 3 690 827 A1**
(43) Veröffentlichungstag der Anmeldung: **05.08.2020**
(21) Anmeldenummer: 20154467.3
(22) Anmeldetag: 30.01.2020
(51) Int. Cl.: G07C 5/08, B60W 50/04, G07C 5/00

(54) **VERFAHREN, STEUERUNG UND KRAFTFAHRZEUG**

(30) Priorität: 30.01.2019 DE 102019201207
(71) Anmelder: Volkswagen Aktiengesellschaft, 38440 Wolfsburg (DE)
(72) Erfinder: Jonas, Konstantin, 10829 Berlin (DE); Mölle, Steffen, 39128 Magdeburg (DE)

(57) **Zusammenfassung**

Verfahren (1) zum Analysieren einer Betriebssituation eines Kraftfahrzeugs (2), umfassend: Ermitteln (32) eines Satzes zeitlicher Verläufe von Parametern (5), wobei der Satz zeitlicher Verläufe von Parametern (5) eine Betriebssituation des Kraftfahrzeugs (2) charakterisiert, zum Analysieren der Betriebssituation des Kraftfahrzeugs (2) durch Ermitteln einer statistischen Abweichung des Satzes zeitlicher Verläufe von Parametern (5) von wenigstens einem Referenzsatz zeitlicher Referenzverläufe von Parametern (7).

## Beschreibung

Die Erfindung betrifft ein Verfahren, eine Steuerung sowie ein Kraftfahrzeug.

Kraftfahrzeuge haben typischerweise eine Vielzahl von Sensoren, Steuergeräten oder allgemein Bauteile, welche dazu in der Lage sind, Messdaten, Kennzahlen oder fahrzeugspezifische Parameter entweder durch direkte oder indirekte Messung oder durch Modellierung oder Simulation zu ermitteln.

Diese Vielzahl an Parametern, welche ermittelt werden können, können zum Beispiel Werkstätten auslesen, um Probleme am Kraftfahrzeug festzustellen. Dies wird allerdings typischerweise nur für einen vorgegebenen Satz von Parametern und nur für einen Zeitpunkt durchgeführt, an dem das Fahrzeug stillsteht, sodass für andere Betriebssituationen wichtige Parameter nicht oder nur unzureichend bestimmt werden oder ein zeitlicher Verlauf von Parametern außer Acht gelassen wird, sodass eine Dynamik einer Betriebssituation nicht erfasst werden kann.

Aus der Offenlegungsschrift DE 10 2015 218 262 A1 ist ein Verfahren bekannt, welches zur Zustandsüberwachung einer Mehrzahl an Fahrzeugen dient. Jedoch wird hier ein vorgegebener Satz von Zustandsinformationen ohne zeitlichen Verlauf analysiert.

Eine Vorrichtung zum Verarbeiten von Fahrzeugdaten eines Fahrzeugs ist aus der Offenlegungsschrift DE 10 2013 203 943 A1 bekannt, welche den Nachteil hat, dass zeitliche Verläufe der Fahrzeugdaten außer Acht gelassen werden.

Die Offenlegungsschrift DE 103 23 384 A1 betrifft ein Diagnosesystem, wobei sich ein Fahrzeug Ergebnisse einer Diagnose von dem Diagnosesystem herunterladen kann und selbst auswertet. Allerdings handelt es sich hier um einen vorgegebenen Satz von Daten, welcher für die Diagnose ausgewertet wird.

Eine Vorrichtung zum Prognostizieren eines Problems mit dem Gesundheitszustand eines Fahrzeugbremssystems ist aus der Offenlegungsschrift DE 10 2017 101 510 A1 bekannt. Nachteilig ist, dass diese Vorrichtung ausschließlich das Bremssystem betrifft.

Die Offenlegungsschrift DE 10 2014 105 674 A1 beschreibt ein System, womit ein Steuergerät während eines Fehlerauslösers kontextabhängige Daten erhält, um den Fehlerauslöser zu analysieren, wobei nur ein vorgegebener Datensatz analysiert wird, um den Fehlerauslöser zu bestimmen.

Aufgabe der vorliegenden Erfindung ist es, ein Verfahren, eine Steuerung und ein Kraftfahrzeug bereitzustellen, welche die oben genannten Nachteile wenigstens teilweise überwinden.

Diese Aufgabe wird durch das erfindungsgemäße Verfahren nach Anspruch 1, durch die Steuerung nach Anspruch 9 und durch das Kraftfahrzeug nach Anspruch 10 gelöst.

Nach einem ersten Aspekt der vorliegenden Erfindung umfasst ein Verfahren zum Analysieren einer Betriebssituation:
Ermitteln eines Satzes zeitlicher Verläufe von Parametern, wobei der Satz zeitlicher Verläufe von Parametern eine Betriebssituation des Kraftfahrzeugs charakterisiert, zum Analysieren der Betriebssituation des Kraftfahrzeugs durch Ermitteln einer statistischen Abweichung des Satzes zeitlicher Verläufe von Parametern von wenigstens einem Referenzsatz zeitlicher Referenzverläufe von Parametern.

Nach einem zweiten Aspekt der vorliegenden Erfindung ist eine Steuerung zum Analysieren einer Betriebssituation dazu eingerichtet, das Verfahren nach dem erstem Aspekt auszuführen.

Nach einem dritten Aspekt der vorliegenden Erfindung hat ein Kraftfahrzeug eine Steuerung nach dem zweiten Aspekt.

Weitere vorteilhafte Ausgestaltungen der Erfindung ergeben sich aus den Unteransprüchen und der folgenden Beschreibung bevorzugter Ausführungsbeispiele der vorliegenden Erfindung.

Wie erwähnt, betreffen manche Ausführungsbeispiele ein Verfahren zum Analysieren einer Betriebssituation eines Kraftfahrzeugs, umfassend: Ermitteln eines Satzes zeitlicher Verläufe von Parametern, wobei der Satz zeitlicher Verläufe von Parametern eine Betriebssituation des Kraftfahrzeugs charakterisiert, zum Analysieren der Betriebssituation des Kraftfahrzeugs durch Ermitteln einer statistischen Abweichung des Satzes zeitlicher Verläufe von Parametern von wenigstens einem Referenzsatz zeitlicher Referenzverläufe von Parametern.

Das Ermitteln eines Satzes zeitlicher Verläufe von Parametern kann auf verschiedene Weisen implementiert sein.

Beispielsweise ist es möglich, dass CAN-Daten (Controller Area Network) verwendet werden, welche über einen vorgegeben Zeitraum gesammelt werden. Des Weiteren können auch andere Daten verwendet werden. Beispielsweise ist es möglich, dass Daten verwendet werden, die von einem mobilen Endgerät (z. B. Smartphone, Tablet, etc.) empfangen oder aufgenommen werden, welches über eine drahtgebundene oder drahtlose Schnittstelle (wie z. B. W-LAN, Bluetooth, USB, Infrarot, etc.) mit dem Kraftfahrzeug ist, wie zum Beispiel Audiodaten, Bewegungsdaten, Temperaturdaten, Positionsdaten, etc.

Andere Parameter, welche die Steuerung über fahrzeugeigene Systeme erhält, sind zum Beispiel Position oder Neigung (von Komponenten) des Fahrersitzes, Fahrergewicht, oder dergleichen. In manchen Ausführungsbeispielen werden solche Daten oder andere personenbezogene auch für andere Fahrzeuginsassen als den Fahrer aufgezeichnet bzw. verwendet.

Aus den gesammelten Parametern, Daten, oder dergleichen wird dann ein Satz ermittelt, zum Beispiel durch eine statistische Analyse, zufällig, durch einen vorgegebenen Algorithmus, durch eine Auswahl aus einer Tabelle, oder dergleichen.

So können bei manchen Ausführungsbeispielen alle Parameter ermittelt werden, die relevant für eine Betriebssituation sind. Da es nicht in jedem Fall bekannt ist, welche Parameter relevant sein können, bietet eine Ermittlung mittels einer statistischen Analyse oder dergleichen den zusätzlichen Vorteil, dass bspw. objektiv alle für die Betriebssituation relevanten Parameter ermittelt werden können.

Der Satz zeitlicher Verläufe von Parametern kann alle oben genannten Daten umfassen, aber auch nur einen Teil davon. In manchen Ausführungsbeispielen wird nur ein bestimmter Satz zeitlicher Verläufe von Parametern ermittelt, wie zum Beispiel Gaspedalstellung, Drehzahl, Öltemperatur, Kühlwassertemperatur und Lenkradstellung, ohne die vorliegende Erfindung darauf zu beschränken.

Des Weiteren werden in manchen Ausführungsbeispielen zeitliche Verläufe von Parametern ermittelt, nachdem die Betriebssituation charakterisiert ist. Beispielsweise können andere zeitliche Verläufe von Parametern dazu verwendet werden, um die Betriebssituation zu analysieren als diejenigen, welche die Betriebssituation charakterisieren. Zum Beispiel kann die Betriebssituation durch einen zeitlichen Verlauf eines Neigungswinkels des Gaspedals charakterisiert sein, analysiert werden jedoch diejenigen zeitlichen Verläufe von Parametern, welche von einem Batteriesteuergerät eines Elektrofahrzeugs bereitgestellt werden oder dergleichen.
Außerdem kann bei manchen Ausführungsbeispielen nur eine Untermenge von den ermittelten zeitlichen Verläufen von Parametern für die Analyse herangezogen werden, da bspw. nicht alle ermittelten Verläufe von Parametern benötigt werden. Dies kann bspw. dann sinnvoll sein, wenn typischerweise eine große Menge an Verläufen von Parametern ermittelt wird, sodass dann eine schnellere und einfachere Analyse basierend auf der Untermenge durchgeführt werden kann. Die Untermenge von den ermittelten zeitlichen Verläufen kann dabei voreingestellt sein (bspw. werksseitig, durch eine Nutzereingabe oder dergleichen), sie kann aber auch auf Grundlage einer bestimmten Betriebssituation ermittelt werden. Zum Beispiel kann ermittelt werden, dass eine Beschleunigungssituation vorliegt und dann, bspw. aus einer Tabelle, abgerufen werden, welche Untermenge von den ermitteln zeitlichen Verläufen für die Analyse herangezogen werden sollen. Die Beschleunigungssituation kann dabei breit gefasst sein und auf Grundlage unterschiedlichster Parameter ermittelt werden, wie zum Beispiel: Gaspedalstellung, Kraftstoffdurchfluss, Drehzahl, Geschwindigkeit, Fahrzeuggeräusche, etc. Die vorliegende Erfindung ist natürlich nicht auf Beschleunigungssituationen beschränkt, sondern grundsätzlich kann der Fachmann für jede beliebige Betriebssituation entsprechende Untermengen von ermittelten Verläufen von Parametern vorsehen.

Des Weiteren ist es möglich, dass auch Daten verwendet werden, die hierin nicht genannt werden. In manchen Ausführungsbeispielen werden alle Daten verwendet, die vom Fahrzeug bzw. von Bauteilen des Fahrzeuges oder von Geräten, die an das Fahrzeug zusätzlich angeschlossen sind (z. B. Smartphone, Tablet, Laptop, etc.) gemessen oder bereitgestellt werden.

Zeitliche Verläufe von Parametern sind beispielsweise Parameter, welche mit einem oder mehreren Zeitpunkten verknüpft sind. Des Weiteren können Parameter auch mit einem Intervall von Zeitpunkten verknüpft sein. Dabei können die Zeitpunkte in der Vergangenheit, in der Gegenwart, oder auch in der Zukunft liegen oder eine Mischung sein.

Die zeitlichen Verläufe von Parametern können kontinuierlich sein, auch mittels einer Funktion dargestellt werden, oder sie können auch durch eine Vielzahl von diskreten Parameterwerten repräsentiert werden.

Zeitliche Verläufe von Parametern zu verwenden lässt, im Gegensatz zum Auslesen von Daten zu einem bestimmten Zeitpunkt, bei manchen Ausführungsbeispielen zu, dass eine Dynamik des Kraftfahrzeugs analysiert werden kann. Hierbei kann die Dynamik in einem vergangenen Zeitintervall bestimmt werden, welches in manchen Ausführungsbeispielen auch als Referenzsatz zeitlicher Verläufe von Parametern genutzt wird. Ein zeitlicher Verlauf kann auch ein Zeitintervall betreffen, welches von der Vergangenheit in die Gegenwart reicht und auch darüber hinausgeht. Beispielsweise kann ein zeitlicher Verlauf mehrere Minuten lang sein oder für ein Zeitpunkt in der Zukunft bestimmt werden, an welchem die Bestimmung eines zeitliches Verlaufs beginnt.

Darüber hinaus können zeitliche Verläufe von Parametern, welche in der Zukunft liegen, auch durch eine Simulation aus zeitlichen Verläufen von Parametern aus der Vergangenheit oder der Gegenwart entstehen.

So kann ein Referenzsatz zeitlicher Referenzverläufe von Parametern bestimmt werden, welcher mit einem Satz von Parametern verglichen werden kann. Außerdem kann so in manchen Ausführungsbeispielen eine Vorhersage für eine zukünftige Betriebssituation getroffen werden.

Parameter sind beispielsweise Messdaten, die von einem Sensor oder dergleichen aufgenommen werden. Des Weiteren können Parameter auch durch eine Simulation oder Modellierung von Messdaten entstehen oder eine Mischung aus Messdaten und Simulation(en) sein. Parameter können außerdem auch extern bereitgestellt werden, wie zum Beispiel durch ein an das Fahrzeug angeschlossenes mobiles Endgerät, über das Internet, oder dergleichen, wie bereits hierin beschrieben. Solche Parameter sind beispielsweise Außentemperatur, Stauinformationen oder dergleichen.

Die Betriebssituation kann auf verschiedene Weisen charakterisiert werden. Zum Beispiel kann ein Satz von Betriebssituationen vorgegeben sein, aus dem eine Betriebssituation ausgewählt werden kann, wobei jede der vorgegebenen Betriebssituation mit einem bestimmten Satz von Parametern verknüpft ist. Beispielsweise ist es möglich, die Betriebssituation Beschleunigung zu definieren, welche mit den Parametern Öltemperatur, Gaspedalstellung, Drehzahl und/oder Gang verknüpft ist. Verknüpfungen dieser Betriebssituation mit anderen Parametern sowie andere Betriebssituationen mit anderen Verknüpfungen mit Parametern sind ebenfalls möglich.

Auf diese Weise kann ein Satz von vorgegebenen Betriebssituationen definiert werden, welche in manchen Ausführungsbeispielen relevant sind. Es ist möglich, dass der Satz von vorgegebenen Betriebssituationen durch das hierin beschriebene Verfahren dynamisch angepasst wird, wenn festgestellt wird, dass andere Betriebssituationen relevant sind.

Des Weiteren kann die Betriebssituation aufgrund von statistischen Abweichungen von einem bekannten Satz von Parametern bestimmt werden. Beispielsweise kann eine Beschleunigungssituation so charakterisiert werden, dass die Gaspedalstellung in Abhängigkeit der Drehzahl und des eingelegten Gangs bestimmt wird.

Eine andere Art, eine Betriebssituation zu charakterisieren, ist, die Betriebssituation in der Weise zu ermitteln, dass ein relevanter Satz von Parametern ausgewählt wird, welcher für die Betriebssituation charakteristisch ist. Die Auswahl kann z. B. durch ein neuronales Netzwerk, durch Machine-Learning-Methoden, oder dergleichen getroffen werden.

Die Betriebssituation kann außerdem mit Methoden charakterisiert werden, wie sie gebräuchlich sind in der Verarbeitung von großen Datenmengen (Big Data Analysis).

Dies bietet den Vorteil, dass Betriebssituationen vorher nicht definiert werden müssen, sodass alle möglichen Betriebssituationen berücksichtigt werden können.

Das Analysieren der Betriebssituation kann grundsätzlich im Fahrzeug selbst geschehen. Außerdem kann das Analysieren der Betriebssituation entfernt, z. B. in einer Datencloud, einem Rechenzentrum, einer Serveranlage, oder dergleichen, stattfinden.

Vor allem im Fall der Charakterisierung mit Hilfe von Methoden aus Big Data Analysis, Machine-Learning oder andere Methoden, welche eine große Rechenleistung benötigen, kann das entfernte Analysieren schneller geschehen als wenn die Analyse im Fahrzeug selbst stattfindet, da dort bspw. größere Rechenkapazitäten vorhanden sind.

Das Analysieren umfasst beispielsweise die statistische Auswertung von Daten, wie zum Beispiel Daten wie hierin beschrieben.

Die statistische Abweichung kann durch verschiedene, in der Statistik bekannte, Methoden ermittelt werden.

Hier kann zum Beispiel ein Minimierungsproblem, eine Analyse der kleinsten Quadrate, ein Gauß'scher Fehler, eine Signifikanzprüfung, oder dergleichen zugrunde gelegt werden.

Der Referenzsatz zeitlicher Referenzverläufe von Parametern kann eine theoretische Ermittlung eines Optimums der jeweiligen Parameter sein. Außerdem kann der Referenzsatz ein (oder mehrere) in der Vergangenheit vom Kraftfahrzeug aufgezeichneter Satz von Parametern sein.

So kann beispielsweise ein Vergleich eines Satzes zeitlicher Verläufe von Parametern mit dem Referenzsatz zeitlicher Referenzverläufe von Parametern durchgeführt werden.

Des Weiteren können andere Fahrzeuge einen oder mehrere Sätze von Parametern in der Vergangenheit oder gegenwärtig aufzeichnen und diese Sätze von Parametern bereitstellen. In diesem Fall kann die statistische Abweichung von einem zeitlichen Verlauf von Mittelwerten, Medianen, oder dergleichen der Referenzsätze bestimmt werden, ohne die vorliegende Erfindung darauf zu beschränken.

Dies bietet den Vorteil, dass eine signifikante Abweichung des Satzes von Parametern vom Referenzsatz ermittelt werden kann, zum Beispiel durch die Festlegung eines Konfidenzintervalls oder anderen statistischen Methoden.

In manchen Ausführungsbeispielen weist das Ermitteln des Satzes zeitlicher Verläufe von Parametern das Festlegen eines Zeitintervalls der zeitlichen Verläufe von Parametern auf.

Wie bereits beschrieben kann das Zeitintervall ein vergangenes Zeitintervall, ein gegenwärtiges Zeitintervall, ein zukünftiges Zeitintervall oder eine Mischung der drei Möglichkeiten sein.

Das Festlegen umfasst in manchen Ausführungsbeispielen das Festlegen eines Startzeitpunkts des Zeitintervalls und eines Endzeitpunkts des Zeitintervalls. In manchen Ausführungsbeispielen umfasst das Festlegen das Festlegen der Länge des Zeitintervalls. Beispielsweise ist es möglich, dass der Satz von Parametern immer für eine vorgegebene Dauer gespeichert wird (z. B. eine Minute), sodass es möglich ist, den Satz von Parametern für die vorgegebene Dauer unmittelbar abzurufen. Andererseits ist es auch möglich, dass das Zeitintervall in der Vergangenheit beginnt und in der Zukunft endet. Beispielsweise kann in manchen Ausführungsbeispielen zusätzlich zu der vorgegebenen Dauer oder eines Teils der vorgegebenen Dauer der Satz von Parametern eine weitere vorgegebene Dauer lang gespeichert werden. In manchen Ausführungsbeispielen kann von einem gegenwärtigen Zeitpunkt aus eine vorgegebene Länge der Satz zeitlicher Verläufe von Parametern ermittelt werden.

Das Festlegen der Dauer des Zeitintervalls kann durch eine Benutzereingabe erfolgen oder durch die Betriebssituation vorgegeben sein. Außerdem kann das Zeitintervall auch durch ein externes System vorgegeben sein, wie zum Beispiel eine Datencloud in einem Rechenzentrum, welche abhängig von der Rechenleistung, Speicherkapazität oder dergleichen das Zeitintervall bestimmt.

In manchen Ausführungsbeispielen erfolgt das Ermitteln in Reaktion auf eine Benutzereingabe.

Die Benutzereingabe kann durch das Drücken eines Knopfes bzw. durch Betätigen eines Schalters erfolgen. Der Knopf bzw. Schalter kann ein Bauteil des Kraftfahrzeugs sein. Es kann sich aber auch um einen virtuellen Knopf bzw. Schalter handeln, z. B. auf einem kraftfahrzeugeigenen Display, welches dazu konfiguriert ist, eine Benutzereingabe zu empfangen, auf einem Smartphone, Tablet, oder dergleichen. Die Benutzereingabe kann auch durch einen Sprachbefehl erfolgen, welcher über ein fahrzeugeigenes Mikrofon oder ein Mikrofon eines Smartphones, Tablet, etc., empfangen wird.

So kann das hierin beschriebene Verfahren bei manchen Ausführungsbeispielen dann ausgeführt werden, wenn ein Fahrer des Kraftfahrzeugs oder ein anderer Insasse, das Verfahren ausführen möchte. Dies kann beispielsweise aufgrund eines ungewöhnlichen Geräuschs geschehen oder der Fahrer oder Insasse ist mit einer bestimmten Betriebssituation nicht vertraut und hat den Wunsch, zu kontrollieren, ob sich das Kraftfahrzeug richtig verhält. Auch andere Indikatoren als ein Geräusch können dazu führen, dass ein Fahrzeuginsasse das Verfahren ausführen möchte, zum Beispiel wenn (im Fall eines Elektrofahrzeugs) plötzlich die Batterieladung höher oder niedriger ist als zuvor.

Das Verfahren kann im Allgemeinen auch für Kontrollzwecke unabhängig von der jeweiligen Fahrsituation ausgeführt werden, zum Beispiel auf einem Prüfstand.

In manchen Ausführungsbeispielen wird der Satz zeitlicher Verläufe von Parametern basierend auf fahrzeugbezogenen Sensordaten und/oder nicht-fahrzeugbasierten Sensordaten bestimmt.

Fahrzeugbezogene Sensordaten können in diesem Zusammenhang Daten sein, welche von einem fahrzeugeigenen Sensor aufgezeichnet werden, wie zum Beispiel ein Luftdrucksensor oder ein Temperatursensor.

In manchen Ausführungsbeispielen repräsentieren die fahrzeugbezogenen Sensordaten wenigstens eines von Gaspedalstellung, Öltemperatur, Kühlwassertemperatur, Bremskraft, Reifendruck, Kraftstoffdurchflussrate, Kraftstoffverbrauch, Lenkradstellung, Drehzahl, Leistung, Insassengewicht oder dergleichen. Auch Sensordaten, welche elektronische Bauteile betreffen, können fahrzeugbezogene Sensordaten sein, z. B. dann wenn es sich um ein Elektro-Kraftfahrzeug handelt. Beispielsweise ist es möglich, den zeitabhängigen Temperatur-, Spannungs-, Strom-, Widerstands-, Leistungsverlauf oder dergleichen verschiedener Bauteile, wie beispielsweise der Fahrzeugbatterie, aufzuzeichnen.

Nicht-fahrzeugbasierte Sensordaten können in diesem Zusammenhang Daten sein, welche von Sensoren aufgezeichnet werden, die nur indirekt mit dem Kraftfahrzeug verbunden sind. Beispielsweise können dies Daten sein, welche von einem Smartphone, Tablet, Over-the-air-Schnittstelle des Kraftfahrzeugs oder dergleichen aufgezeichnet oder akquiriert werden, wie zum Beispiel Sprachdaten, Beschleunigungsdaten, Wetterdaten, Stauinformationen, Positionsdaten (z. B. GPS) oder dergleichen.

Auf diese Weise können bei manchen Ausführungsbeispielen alle für die Betriebssituation relevanten Informationen gesammelt werden.

In manchen Ausführungsbeispielen erfolgt das Ermitteln einer statistischen Abweichung des Satzes zeitlicher Verläufe von Parametern von einer Vielzahl von Referenzsätzen zeitlicher Referenzverläufen, welche von einer Vielzahl von Kraftfahrzeugen bereitgestellt wird.

Die Vielzahl von Referenzsätzen zeitlicher Referenzverläufe kann jede beliebige Anzahl größer oder gleich eins sein, sodass eine statistische Abweichung ermittelt werden kann.

Die Vielzahl von Kraftfahrzeugen, welche die Vielzahl von Referenzsätzen zeitlicher Referenzverläufe bereitstellt, können Kraftfahrzeuge sein, welche im Betrieb eine Vielzahl von Referenzsätzen aufzeichnen. Es können Erprobungsfahrzeuge, z. B. von einem Kraftfahrzeughersteller, Kraftfahrzeughändler, oder dergleichen sein, welche dazu eingerichtet sind, eine möglichst große Zahl von Referenzsätzen zeitlicher Referenzverläufe zu ermitteln. Dadurch können Referenzsätze zeitlicher Referenzverläufe bereitgestellt werden, wenn das Verfahren für eine bestimmte Betriebssituation zum ersten Mal ausgeführt wird.

Es können Fahrzeuge sein, welche das Verfahren nach einem Ausführungsbeispiel ausführen und der ermittelte Satz zeitlicher Verläufe von Parametern infolgedessen als Referenzsatz zeitlicher Referenzverläufe von Parametern vorliegt. Beispielsweise kann das Verfahren durchgeführt werden, während sich das Kraftfahrzeug auf einem Prüfstand befindet, woraufhin Daten, welche auf dem Prüfstand ermittelt wurden, als Referenzsatz zeitlicher Referenzverläufe von Parametern vorliegen. Hierbei können auch einzelne Komponenten des Kraftfahrzeugs vermessen werden, um zeitliche Referenzverläufe von Referenzparametern aufzuzeichnen, wie beispielsweise in einem Hardware-in-the-Loop Test.

So können möglichst viele Referenzsätze zeitlicher Referenzverläufe gesammelt werden, sodass durch die statistische Analyse eine signifikante Aussage getroffen werden kann. Bei der Vielzahl von Kraftfahrzeugen muss es sich nicht um die gleiche Art von Kraftfahrzeugen handeln wie das Kraftzeug, welches das Verfahren ausführt. Es kann festgelegt werden, von welchen Kraftfahrzeugen die Referenzsätze zeitlicher Referenzverläufe für die statistische Analyse genommen werden. Dies kann abhängig vom Kraftfahrzeughersteller, Kraftfahrzeugtyp, Baujahr, Motorleistung, oder dergleichen sein.

Auf diese Weise kann die statistische Abweichung von relevanten Referenzsätzen zeitlicher Referenzverläufe bestimmt werden.

In manchen Ausführungsbeispielen wird der Referenzsatz zeitlicher Referenzverläufe ermittelt, während das Verfahren ausgeführt wird. In diesen Ausführungsbeispielen ermittelt das Kraftfahrzeug die Betriebssituation und sendet daraufhin ein Signal, zum Beispiel an einen Server, mit dem eine Vielzahl von Vergleichskraftfahrzeugen kommuniziert. Daraufhin bestimmt jedes Vergleichskraftfahrzeug seine Betriebssituation. Falls die Betriebssituation des Vergleichskraftfahrzeugs mit der Betriebssituation des Kraftfahrzeugs übereinstimmt, sendet es einen Referenzsatz zeitlicher Referenzverläufe von Parametern an den Server. Vorteilhaft an diesen Ausführungsbeispielen ist die Ersparnis von Speicherplatz.

In manchen Ausführungsbeispielen ist eine vorgegebene Menge von Referenzsätzen zeitlicher Referenzverläufe auf einem Server oder dergleichen gespeichert und zusätzlich dazu werden Referenzsätze zeitlicher Referenzverläufe ermittelt, während das Verfahren ausgeführt wird, wie hierin beschrieben.

In manchen Ausführungsbeispielen erfolgt das Ermitteln einer statistischen Abweichung des Satzes zeitlicher Verläufe von Parametern aus einem statistischen Referenzsatz zeitlicher Referenzverläufe, welcher basierend auf der Vielzahl von Referenzsätzen zeitlicher Referenzverläufe ermittelt wird.

Beispielsweise ist es möglich, einen Verlauf von Mittelwerten, Medianen oder dergleichen aus der Vielzahl statistischer Referenzsätze zeitlicher Referenzverläufe zu ermitteln, damit eine Signifikanzaussage der statistischen Analyse getroffen werden kann.

In manchen Ausführungsbeispielen wird die Vielzahl von Referenzsätzen zeitlicher Referenzverläufe von Parametern entfernt vom Kraftfahrzeug gespeichert.

Entfernt kann in diesem Zusammenhang auf einem Server, in einer Datencloud, in einem Rechenzentrum oder dergleichen bedeuten.

So kann in manchen Ausführungsbeispielen eine Vielzahl von Referenzsätzen zeitlicher Referenzverläufe gesammelt werden, welche für eine statistische Analyse benutzt werden.

Manche Ausführungsbeispiele betreffen eine Steuerung zum Analysieren einer Betriebssituation eines Kraftfahrzeugs.

Die Steuerung ist beispielsweise ein Steuergerät sein, ein Bordcomputer, oder dergleichen, welches dazu eingerichtet ist, ein Verfahren nach einem der Ausführungsbeispiele auszuführen.

Hierbei ist es möglich, dass eine Steuerung, welche bereits in einem Kraftfahrzeug vorhanden ist, wie zum Beispiel eine Motorsteuerung, eine ABS-Steuerung, eine Getriebesteuerung, eine Batteriesteuerung, zusätzlich dazu eingerichtet wird, das Verfahren auszuführen.

Dies hat den Vorteil, dass kein neues Bauteil in das Kraftfahrzeug eingebaut werden muss.

Ferner ist es möglich, dass eine Steuerung ausschließlich dazu eingerichtet ist, das Verfahren auszuführen, was das Verfahren unberührt vom Betrieb anderer Bauteile lässt und damit schützt.

Dies hat den Vorteil, dass Daten, Informationen, Parameter, oder dergleichen, welche benötigt werden, um eine Betriebssituation zu analysieren, in einem Bauteil des Fahrzeugs gesammelt werden können, welches das hierin beschriebene Verfahren ausführen kann.

Manche Ausführungsbeispiele betreffen ein Kraftfahrzeug.

Das Kraftfahrzeug kann jedes beliebige, durch einen Motor betriebene (z. B. Verbrennungsmaschine, Elektromaschine, etc.) Art von Kraftfahrzeug bezeichnen, wie zum Beispiel ein Automobil, ein Motorrad, einen Lastkraftwagen, einen Omnibus, land- oder forstwirtschaftliche Zugmaschinen, etc.

Ausführungsbeispiele der Erfindung werden nun beispielhaft und unter Bezugnahme auf die beigefügte Zeichnung beschrieben, in der:
- Fig. 1: zeigt ein Verfahren gemäß eines Ausführungsbeispiels der Erfindung;
- Fig. 2: zeigt eine Steuerung gemäß eines Ausführungsbeispiels der Erfindung; und
- Fig. 3: zeigt ein Flussdiagramm gemäß eines Ausführungsbeispiels der Erfindung.

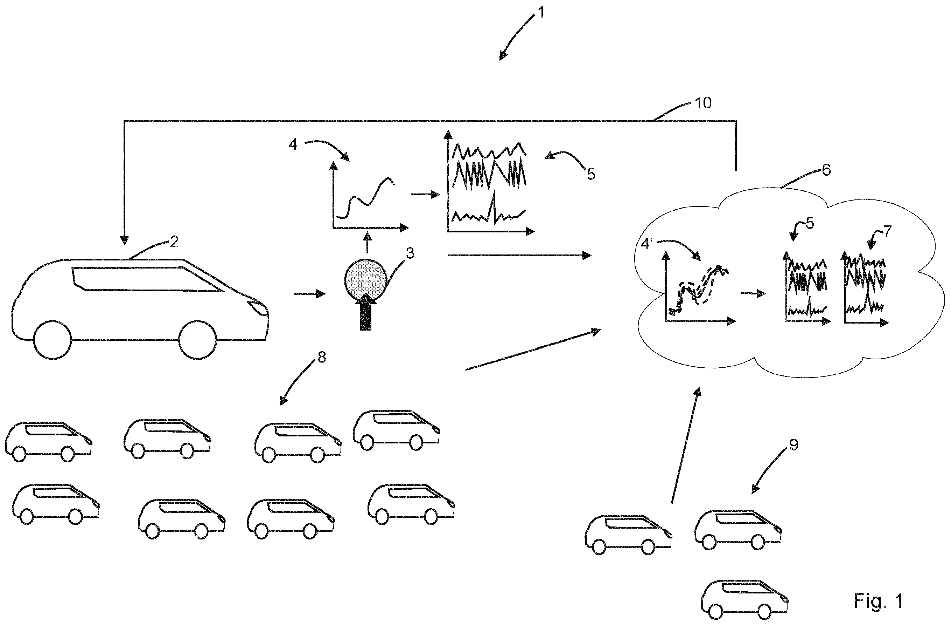

Ein Ausführungsbeispiel eines Verfahrens 1 ist in Fig. 1 dargestellt.

Der Fahrer eines Personenkraftwagens 2 hört bspw. während des Beschleunigens ein Geräusch, welches ihm ungewöhnlich erscheint. Deshalb hat der Fahrer den Wunsch, die Betriebssituation Beschleunigung zu analysieren, damit er weiß, ob das von ihm gehörte Geräusch auf einen Schaden des Personenkraftwagens 2 hinweisen könnte.

Dazu drückt der Fahrer einen Knopf 3, welcher sich im Fahrzeug befindet und dazu eingerichtet ist, die Analyse des Betriebszustands des Personenkraftwagens 2 auszulösen. Daraufhin werden dreißig Sekunden lang alle fahrzeugeigenen CAN-Daten aufgezeichnet, woraufhin die Betriebssituation charakterisiert wird, indem die CAN-Daten statistisch analysiert werden (CAN-Daten umfassen in diesem Ausführungsbeispielen alle Daten, die über einen CAN-Bus abgerufen werden können und bspw. in einer zentralen Motorsteuerung gespeichert werden).

Eine statistische Analyse, die durch die Betätigung des Knopfes 3 ausgelöst wird, zeigt eine signifikante Änderung des Geschwindigkeitsprofils 4 wie sie in einer Beschleunigungssituation vorkommen kann. Das Koordinatensystem, auf dem das Geschwindigkeitsprofil 4 dargestellt wird, ist in diesem Ausführungsbeispiel symbolisch als ein Tupel von den Daten Geschwindigkeit und Zeit zu verstehen.

Daraufhin erstellt das Verfahren 1 einen zeitlichen Verlauf von Parametern 5, für welche eine signifikante Änderung ermittelt wurde. In diesem Ausführungsbeispiel sind die Parameter Gaspedalstellung, Öltemperatur, Kühlwassertemperatur, Bremskraft, Reifendruck, Kraftstoffdurchflussrate, Kraftstoffverbrauch, Lenkradstellung und Drehzahl, welche symbolisch mit drei zeitlichen Verläufen dargestellt sind.

Diese Daten werden dann an eine in einem Rechenzentrum integrierte Datencloud 6 gesendet. Die Datencloud 6 umfasst des Weiteren Referenzsätze zeitlicher Referenzverläufe von Parametern, welche von einer Vielzahl von Personenkraftwagen 8, 9 aufgezeichnet wurde. Die Datencloud 6 kann darüber hinaus dazu eingerichtet sein, besondere Betriebssituationen zu erkennen und diese als Grundlage für die anstehende und/oder künftige Analysen heranzuziehen. Besondere Betriebssituationen können dadurch charakterisiert sein, dass sie besonders häufig (oberhalb eines Schwellwertes) analysiert werden (z. B., wenn der Fahrer immer in einer Linkskurve das hierin beschriebene Verfahren auslöst, wodurch dann bspw. auf eine Fehlersituation bei dem Fahrzeug oder eine ganzen Fahrzeugreihe geschlossen werden kann). Besondere Betriebssituationen können darüber hinaus auch dadurch charakterisiert sein, dass sie durch einen Trend oder dergleichen vorgegeben sind. So ist es beispielsweise möglich, dass mehrere Nutzer das hierin beschriebene Verfahren dazu verwenden, um ihre jeweiligen Kraftfahrzeuge, Fahrkünste auf Strecken, Beschleunigungen, etc. miteinander zu vergleichen, beispielsweise in einem Vergleichsportal in einem sozialen Netzwerk oder dergleichen, welches die Daten dann entsprechend zur Verfügung stellt.
Die Vielzahl von Personenkraftwagen 8 umfasst Fahrzeuge, welche dazu eingerichtet sind, das Verfahren gemäß eines Ausführungsbeispiels auszuführen und in diesem Ausführungsbeispiel zur Vereinfachung der Darstellung in Fig. 1 Referenzsätze zeitlicher Referenzverläufe von Parametern zur Verfügung gestellt haben, welche eine ähnliche Betriebssituation (Beschleunigung) beschreiben.

Die Referenzsätze zeitlicher Referenzverläufe wurden dadurch ermittelt, dass das Verfahren gemäß eines Ausführungsbeispiels in einem Satz von Personenkraftwagen der Vielzahl von Personenkraftwagen 8 ausgeführt wurde und die ermittelten Sätze zeitlicher Verläufe von Parametern infolgedessen als Referenzsätze zeitlicher Referenzverläufe in der Datencloud 6 gespeichert wurden.

Die Vielzahl von Personenkraftwagen 9 umfasst Erprobungsfahrzeuge, welche in diesem Ausführungsbeispiel eine Vielzahl von Referenzsätzen zeitlicher Referenzverläufe von Parametern für eine Vielzahl von Betriebssituationen ermittelt haben, damit Referenzsätze von zeitlicher Referenzverläufe von Parametern zur Verfügung stehen, wenn das Verfahren zum ersten Mal ausgeführt wird.

In der Datencloud 6 werden der Betriebssituation "Beschleunigung" ähnliche Betriebssituationen mit Hilfe einer statistischen Analyse bestimmt (dargestellt mit Diagramm 4', wobei die durchgezogene Linie der Linie aus Diagramm 4 entspricht und die gestrichelten Linien ähnliche Betriebssituationen darstellen).

Daraufhin wird der Satz zeitlicher Verläufe von Parametern 5 auf signifikante Abweichungen mit einem Konfidenzintervall von fünf Prozent mit einem mittleren Referenzsatz zeitlicher Referenzverläufe 7 überprüft, welcher durch Mittelwertbildung der Vielzahl der Referenzsätze zeitlicher Referenzverläufe entsteht.

In diesem Ausführungsbeispiel verhält sich der Personenkraftwagen 2 anders als 95 % der Kraftfahrzeuge, welche einen Referenzsatz zeitlicher Referenzverläufe zur Verfügung gestellt haben.

Durch eine Mitteilung 10 wird der Fahrer des Personenkraftwagens 2 auf diesen Umstand aufmerksam gemacht und ihm wird zusätzlich empfohlen, eine Werkstatt aufzusuchen.

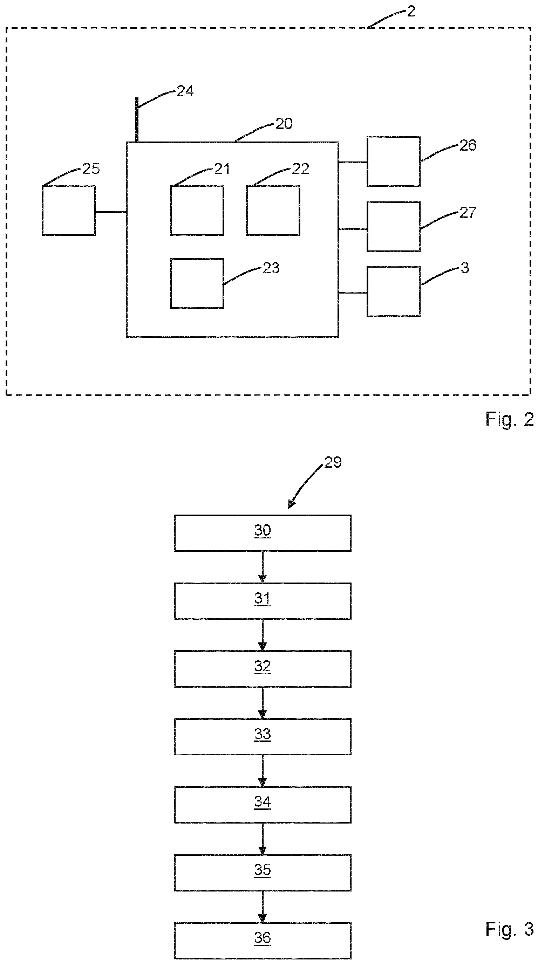

Fig. 2 zeigt eine Steuerung 20, die dazu konfiguriert ist, das hierin beschriebene Verfahren auszuführen.

Die Steuerung 20 befindet sich im Personenkraftwagen 2 und umfasst einen Prozessor 21, einen Speicher 22, mehrere Schnittstellen 23 und eine Antenne 24. Des Weiteren ist die Steuerung 20 mit dem CAN-System 25, mit einem Bordcomputer 26, mit einem Display 27 und mit einem Eingabeknopf 28 verbunden.

Der Prozessor 21 ist dazu konfiguriert, eine statistische Analyse gemäß des hierin beschriebenen Verfahrens durchzuführen.

Der Speicher 22 speichert die CAN-Daten für ein vorgegebenes Zeitintervall (z. B. eine Minute), welche vom CAN-System 25 und dem Bordcomputer 26 bereitgestellt werden.

Die mehreren Schnittstellen 23 sind USB-, Bluetooth- und W-LAN-Schnittstellen, um ein Handy oder Tablet oder dergleichen mit der Steuerung 20 zu koppeln.

Die Antenne 24 ist eine Over-the-air-Schnittstelle, welche den Personenkraftwagen 2 dazu ermöglicht, mit der Datencloud 6 zu kommunizieren.

Das Display 27 zeigt die Mitteilung 10 an, welche von der Datencloud 6 an den Personenkraftwagen 2 übermittelt wird.

Der Eingabeknopf 3 ist dazu konfiguriert, ein Signal zum Auslösen des hierin beschriebenen Verfahrens in Reaktion auf seine Betätigung auszusenden.

Fig. 3 zeigt ein Flussdiagramm 29 eines Ausführungsbeispiels des hierhin beschriebenen Verfahrens 1.

In 30 wird das Verfahren durch einen Kraftfahrzeuginsassen aktiviert (bspw. durch Betätigen des Knopfes 3, wie oben ausgeführt).

In 31 wird durch eine Benutzereingabe ein Zeitintervall festgelegt, in welchem zeitliche Verläufe von Parametern aufgezeichnet werden (wie oben ausgeführt).

In 32 wird ein Satz zeitlicher Verläufe von Parametern ermittelt und für die Dauer des Zeitintervalls gespeichert (wie oben ausgeführt). In diesem Ausführungsbeispiel werden alle CAN-Daten ausgewählt.

In 33 wird aus dem Satz zeitlicher Verläufe von Parametern, welcher in 32 ermittelt wurde, eine Betriebssituation bestimmt (wie oben ausgeführt), indem der Satz zeitlicher Verläufe von Parametern mit Richtwerten aus einer Tabelle abgeglichen wird. In diesem Ausführungsbeispiel wird eine Beschleunigungssituation durch eine signifikante Änderung des Geschwindigkeitsverlaufs bestimmt.

In 34 werden die ermittelten Daten aus dem Satz zeitlicher Verläufe von Parametern an eine Datencloud 6 in einem Rechenzentrum übermittelt (wie oben ausgeführt).

In 35 werden die übermittelten Daten in der Datencloud 6 statistisch analysiert und statistisch signifikante Abweichungen von Referenzsätzen zeitlicher Referenzverläufe ermittelt (wie oben ausgeführt).

In 36 wird das Ergebnis der statistischen Analyse aus 35 an das Fahrzeug übermittelt (wie oben ausgeführt).

### Bezugszeichenliste

- 1: Verfahren
- 2: Kraftfahrzeug
- 3: Knopf
- 4: Geschwindigkeitsprofil
- 4': Vergleich Betriebssituation mit ähnlichen Betriebssituationen
- 5: Zeitlicher Verlauf von Parametern
- 6: Datencloud
- 7: Referenzsatz zeitlicher Referenzverläufe
- 8, 9: Vielzahl von Personenkraftwagen
- 10: Mitteilung
- 20: Steuerung
- 21: Prozessor
- 22: Speicher
- 23: Mehrere Schnittstellen
- 24: Antenne
- 25: CAN-System
- 26: Bordcomputer
- 27: Display
- 29: Flussdiagramm eines Verfahrens gemäß eines Ausführungsbeispiels
- 30: Aktivierung durch Fahrzeuginsasse
- 31: Festlegen eines Zeitintervalls
- 32: Ermittlung Satz zeitlicher Verläufe von Parametern
- 33: Bestimmung Betriebssituation
- 34: Datenübermittlung
- 35: Ermittlung statistische Abweichung
- 36: Übermittlung an Kraftfahrzeug

## Patentansprüche

1. Verfahren (1) zum Analysieren einer Betriebssituation eines Kraftfahrzeugs (2), umfassend:
Ermitteln (32) eines Satzes zeitlicher Verläufe von Parametern (5), wobei der Satz zeitlicher Verläufe von Parametern (5) eine Betriebssituation des Kraftfahrzeugs (2) charakterisiert, zum Analysieren der Betriebssituation des Kraftfahrzeugs (2) durch Ermitteln einer statistischen Abweichung des Satzes zeitlicher Verläufe von Parametern (5) von wenigstens einem Referenzsatz zeitlicher Referenzverläufe von Parametern (7).

2. Verfahren (1) nach Anspruch 1, wobei das Ermitteln (32) des Satzes zeitlicher Verläufe von Parametern (5) das Festlegen (31) eines Zeitintervalls der zeitlichen Verläufe von Parametern aufweist.

3. Verfahren (1) nach einem der Ansprüche 1 oder 2, wobei das Ermitteln (32) in Reaktion auf eine Benutzereingabe (30) erfolgt.

4. Verfahren (1) nach einem der Ansprüche 1 bis 3, wobei der Satz zeitlicher Verläufe von Parametern (5) basierend auf fahrzeugbezogenen Sensordaten und/oder nichtfahrzeugbezogenen Sensordaten bestimmt wird.

5. Verfahren (1) nach Anspruch 4, wobei die fahrzeugbezogenen Sensordaten wenigstens eines der folgenden repräsentieren: Gaspedalstellung, Öltemperatur, Kühlwassertemperatur, Bremskraft, Reifendruck, Kraftstoffdurchflussrate, Kraftstoffverbrauch, Lenkradstellung, Drehzahl, Spannungsverlauf, Stromverlauf, Leistungsverlauf und/oder Batterietemperatur.

6. Verfahren (1) nach einem der vorhergehenden Ansprüche, wobei das Analysieren der Betriebssituation des Kraftfahrzeugs (2) durch Ermitteln einer statistischen Abweichung (35) des Satzes zeitlicher Verläufe von Parametern (5) von einer Vielzahl von Referenzsätzen zeitlicher Referenzverläufe (7) erfolgt, welche von einer Vielzahl von Kraftfahrzeugen (8, 9) bereitgestellt wird.

7. Verfahren (1) nach Anspruch 6, wobei das Analysieren der Betriebssituation des Kraftfahrzeugs (2) durch Ermitteln einer statistischen Abweichung (35) des Satzes zeitlicher Verläufe von Parametern (5) aus einem statistischen Referenzsatz zeitlicher Referenzverläufe von Parametern (7) erfolgt, welcher basierend auf der Vielzahl von Referenzsätzen zeitlicher Referenzverläufe von Parametern (7) ermittelt wird.

8. Verfahren (1) nach einem der Ansprüche 6 oder 7, wobei die Vielzahl von Referenzsätzen zeitlicher Referenzverläufe von Parametern (7) entfernt vom Kraftfahrzeug (2) gespeichert wird.

9. Steuerung (20) zum Analysieren einer Betriebssituation eines Kraftfahrzeugs (2), welche dazu eingerichtet ist, das Verfahren (1) nach einem der Ansprüche 1 bis 8 auszuführen.

10. Kraftfahrzeug (2), welches die Steuerung (20) nach Anspruch 9 aufweist.
